# EUROPEAN PATENT APPLICATION

(11) **EP 2 006 003 A2**
(43) Date of publication of application: **24.12.2008**
(21) Application number: 08105556.8
(22) Date of filing: 25.02.2005
(51) Int. Cl.: A63F 13/12

(54) **Controlling communications between players of a multi-player game**

(62) Divisional of application: 05708760.3
(71) Applicant: Nokia Corporation, 02150 Espoo (FI)
(72) Inventor: Hayashi, Sawako-Eeva, 45147 Essen (DE); Joeressen, Olaf, 40670 Meerbusch (DE)
(74) Representative: Higgin, Paul

(57) **Abstract**

A method for controlling communications between players of a multi-player game while they participate in the multi-player game, comprising: automatically changing communication parameters to define a first group of players that hear a first player and a second, different group of players that are heard by the first player in response to a change in a situation, within the game, of a game character.

## Description

### FIELD OF THE INVENTION

Embodiments of the present invention relate to controlling communications between players of a multi-player game. In particular, they relate to methods, devices, servers, system and computer programs for controlling voice communications between players of a multi-player game.

### BACKGROUND TO THE INVENTION

It would be desirable to include communications as an integral part of a multi-player video game so that a player can communicate with other players. This would bring a new level of co-operation to a game, which would be particularly beneficial for team strategy games.

US2004/0198498 discloses a computer strategy game with a text based chat functionality. Separate chat rooms are set up for different battle groups at the beginning of the game and don't change.

It would be desirable to further develop the use of interactive communications as part of a video game.

### BRIEF DESCRIPTION OF THE INVENTION

According to one embodiment of the invention there is provided a method for controlling communications between players of a multi-player game while they participate in the multi-player game, comprising: automatically changing communication parameters to define a first group of players that hear a first player and a second, different group of players that are heard by the first player in response to a change in a situation, within the game, of a game character.

A communications channel used for communicating with players within the game is thus integrated into the game and is automatically configured during the game. Manual configuration of the communication channel is not required during the game, but it changes dynamically as the game develops.

According to another embodiment of the invention there is provided a server for controlling communications between players of a multi-player game while they participate in the multi-player game, comprising: a memory for storing communication parameters that control communication between the players; and
means for automatically changing communication parameters to define a first group of players that hear a first player and a second, different group of players that are heard by the first player, in response to a change in a situation, within the game, of a game character.

According to another embodiment of the invention there is provided a computer program comprising computer program instructions, which when loaded in a processor provide: means for recording a change in situation, within a game, for a game character controlled by a player; and means, responsive to the recorded change in situation, within the game for automatically changing communication parameters to define a first group of players that hear a first player and a second, different group of players that are heard by the first player.

According to another embodiment of the invention there is provided an electronic gaming device, for playing a multi-player game, that enables communications between a user of the device and players of the multi-player game using other devices and participating in the multi-player game, comprising: a display;
an audio input device; an audio output device; a user input device for controlling a game character within the game; a communications interface for remote communication with one or more other devices; and means for automatically changing communication parameters to define a first group of players that hear the user and a second, different group of players that are heard by the user in response to a change in a situation, within the game, of a game character.

According to another embodiment of the invention there is provided a method of controlling voice communication from a first player participating in a multi-player game to other players participating in the multi-player game, comprising:
automatically routing on-going voice communications originating at the first player to a first group of players and automatically routing on-going voice communications originating at each of a second, different group of players to the first player, wherein the first group of players and the second group of players are separately defined in dependence upon a situation or the situations of one or more game characters within the game.

According to another embodiment of the invention there is provided a server for controlling voice communications between players of a multi-player game while they participate in the multi-player game, comprising: a memory for storing first routing information that controls the routing on-going voice communications originating at the first player to a first group of players and for storing second routing information that controls the routing on-going voice communications originating at each of a second, different group of players to the first player; and means for automatically updating the first routing information and independently updating the second routing information in dependence upon a situation or situations, within the game, of a game character or characters.

According to another embodiment of the invention there is provided a computer program comprising computer program instruction, which when loaded in a processor provide means for recording a situation, within the game, for a game character controlled by a player; and means, responsive to the recorded situation of the game character, for automatically updating, in a defined manner, the destination(s) for on-going voice communications originating at the player and for independently updating, in a defined manner, the identity of the players originating on-going voice communication that are destined for the player.

According to another embodiment of the invention there is provided an electronic gaming device, for playing a multi-player game, that enables voice communications between a user of the device and players of the multi-player game using other devices and participating in the multi-player game, comprising:
a display; an audio input device; an audio output device; a user input device for controlling a game character within the game; a communications interface for supporting voice communication with one or more other devices; and means for automatically updating the destination(s) for on-going voice communications originating at the device and for independently updating which on-going voice communication terminate at the device, the updating being dependent upon a situation, within the game, of a game character.

### BRIEF DESCRIPTION OF THE DRAWINGS

For a better understanding of the present invention reference will now be made by way of example only to the accompanying drawings in which:
Fig. 1 illustrates a gaming system 10 comprising a gaming server 6 and a plurality of remote gaming devices 2A, 2B, 2C;
Fig 2 illustrates a gaming device 2 in more detail;
Fig. 3 illustrates the server 6 in more detail;
Fig. 4 illustrates a method of routing a voice communication while playing a game; and
Fig. 5 illustrates a method of dynamically updating the routing database 34.

### DETAILED DESCRIPTION OF EMBODIMENTS OF THE INVENTION

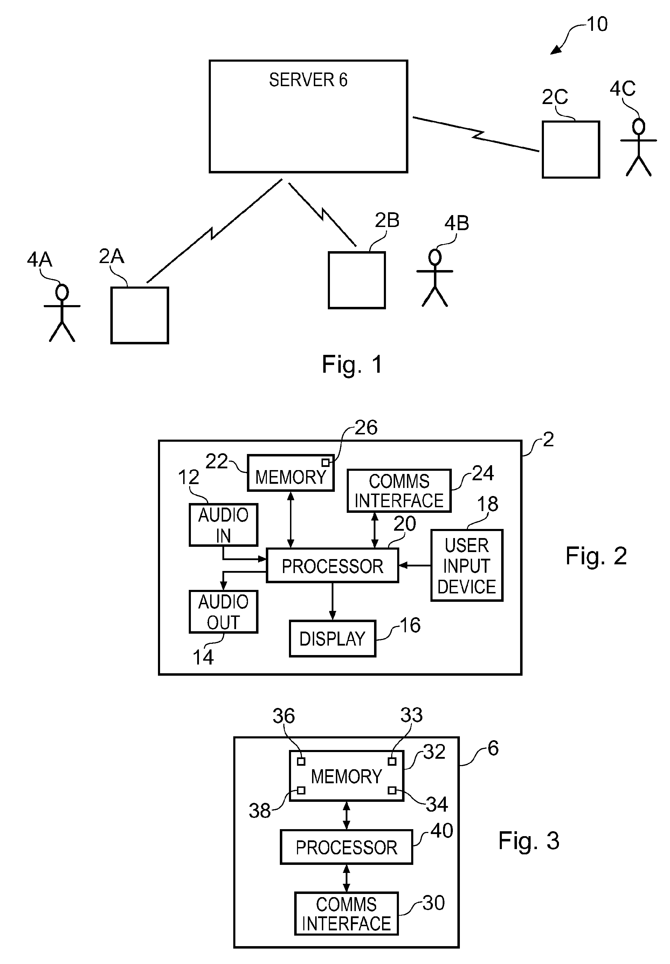

Fig. 1 illustrates a gaming system 10 comprising a gaming server 6 and a plurality of remote gaming devices 2A, 2B, 2C. The gaming devices 2 may be stationary or hand-portable electronic devices.

The device 2A is controlled by user 4A. The device 2B is controlled by user 4B.

The device 2C is controlled by user 4C.

Each of the users 4A, 4B, 4C are participating in a multi-player game hosted by the gaming server 6. The game may be a character based strategy game.

The user 2A while participating in the game as a first player controls the actions of a first game character in the game. The user 2B while participating in the game as a second player controls the actions of a second game character in the game. The user 2C while participating in the game as a third player controls the actions of a third game character in the game.

The first, second and third game characters are typically moved by their respective controlling players from geographic location to geographic location within a virtual landscape defined by the game while trying to complete specified tasks. Each game character may participate in the game as an individual or, perhaps as a member of one of a plurality of teams.

The system 10 allows the players 2A, 2B, 2C to speak with each other via the devices 2 while playing the game.

Typically the identities of the players with which a particular player can communicate are determined to some extent by the situation, within the game, of the game character controlled by that particular player. A player can take action to control the situation of a game character within the game and the identities of the other players with whom the player can have voice communications depends upon the situation of the game character.

Voice communications may be simplex or duplex. Simplex communications are one-way and enable a player either to speak to other players or to listen to other players but not to both speak and listen. Duplex communications are two-way and enable a player to speak and listen to another player or players.

In some implementations, if voice communications are enabled between two players then the voice communications will always be duplex. In other implementations, the nature of the voice communications for a player may vary between simplex receiving (i.e. listening), simplex transmitting (i.e. speaking) and duplex (i.e. listening and speaking) depending upon the situation of the game character controlled by that player.

Fig. 2 illustrates a gaming device 2 in more detail. The gaming device 2 comprises an audio input device 12 such as a microphone, an audio output device 14 such as a loudspeaker or headphone jack, a display 16, a user input device 18 such as a joystick or keypad, a processor 20, a memory 22 and a communications interface 24.

The processor 20 is connected to receive input commands from the audio input device 12 and the user input device 18 and to provide output commands to the audio output device 14 and the display 16. The processor 20 is also connected to read from and write to the memory 22. The processor 20 is also connected to the communications interface 24 and is operable to transmit data packets via the communications interface 24 to the game server 10 and to receive data packets from the game server 10 via the communications interface 24.

The memory 22 stores computer program instructions 26 which when loaded into the processor and run control the functionality of the gaming device 2 and enable it to be used by a user to participate in a multi-player game and have voice communications with other players in the game.

The communications interface 24 may be a network adapter such as a modem or, alternatively, a radio transceiver. The radio transceiver may be a low power radio frequency transceiver suitable for forming an ad-hoc network, such as a Bluetooth piconet or a cellular radio transceiver suitable for communicating in a cellular radio telephone network.

In the following description, as a player controls a game character, the terms player and game character may be interchanged. In particular, although voice communications will in fact be between players i.e. users of the devices 2, for ease of description they will be referred to as between game characters in the following. It should be understood that voice communication between game characters means voice communication between the players controlling those game characters.

Fig. 3 illustrates the game server 6 in more detail. The server 6 comprises a communications interface 30, a memory 32 and a processor 40.

The processor 40 is connected to read from and write to the memory 32. The processor 40 is also connected to the communications interface 30 and is operable to transmit data packets via the communications interface 30 to devices 2 and to receive data packets from devices 2 via the communications interface 30.

The memory 32 stores computer program instructions 33 which when loaded into the processor 40 and run control the functionality of the gaming server 6 and enable it to host a multi-player game and control voice communications between the players of the game.

The memory 32 stores a routing database 34 that organises communication parameters. Each of the game characters in the multi-player game has an associated identifier that can be used as a routing address for routing data packets to the device from which that game character is controlled. The routing database 34 associates with each one of a plurality of identifiers a (different and changeable) list of identifiers. The list associated with a particular game character, identifies the other game characters who can hear the voice communications of that particular game character and, optionally, the quality with which voice communications are heard i.e. volume, whether they echo, are muffled etc. When the routing database 34 is queried using a particular identifier it returns the list of identifiers associated with that particular identifier and, if used, the quality indications.

As the identifiers are routing addresses, the returned list contains a set of destination addresses that are used to route voice packets originating from the device from which the particular game character is controlled. The quality indications, if used, may either be used to modify the voice packets before transmission or may be included with the voice packets to enable the destination device to make the modification.

As a plurality of identifiers belonging to a team or other group may share the same routing addresses, it also possible for some or all of the communication parameter associated with an identifier to be replaced by a pointer to a set of routing addresses. When the routing database is queried with such an identifier, it returns the pointer which is used to retrieve the set of routing addresses. The routing address associated with the identifier is removed from the set and the remaining routing addresses are used along with the other routing addresses associated with the identifier in the routing database, if any.

The memory 32 stores a situation database 36. Any situation of a game character within a game can be defined using a vector of situation parameter values. As a game character participates in the game and moves from situation to situation, the values of the situation parameters change.

One situation parameter may, for example, be used to identify the geographic location of a game character within the game landscape. Another situation parameter may, for example, identify whether the game character has been apprehended/incarcerated or not in the game. A further situation parameter, may indicate whether a game character has or has not collected a particular game object while playing the game. It will be appreciated that depending upon the design of the game different situation parameters may be used. Typically, each situation parameter defines the situation of a game character without reference to another game character.

The situation database 36 defines a number of non-overlapping states, where each state is defined by a different state identifier. Each state identifier is associated with a particular set of ranges for the situation parameters. That is, each state occupies a defined volume in the vector space spanned by the vector of situation parameters.

A first state identifier may indicate that a game character is in a first situation where the character should not hear. If a game character enters the first situation, then the routing database is adapted as described below so that no voice packets are routed to the device that controls that game character.

There may be multiple ones of the first state identifier each of which indicates a situation where the quality of how the game character is heard is affected i.e. whether the volume, pitch, etc of the game characters voice is adapted and/or effects are applied to the voice such as muffling or echo.

A second state identifier may indicate that a game character is in a second situation where the game character should not be heard. If a game character enters the second situation, then the routing database is adapted as described below so that no voice packets originating from the device controlling that game character are routed to other devices.

There may be multiple ones of the second state identifier each of which indicates a situation where the quality of how the game character hears is affected i.e. whether the volume, pitch, etc of the voice of other game characters is adapted and/or effects are applied to those voices such as muffling or echo.

A third state identifier may indicate that a game character is in a third state where the game character should not be able to communicate. If a game character enters the third situation, then the routing database is adapted as described below so that no voice packets are routed to the device that controls that game character and no voice packets originating from the device controlling that game character are routed to other devices.

A fourth state identifier may indicate that a game character is in a fourth state where the game character should be able to communicate. If a game character enters the fourth situation, then the routing database is adapted as described below so that voice packets are routed to the device that controls that game character and voice packets originating from the device controlling that game character are routed to other devices.

There may be multiple ones of the fourth state identifier each of which indicates a situation where the quality of how the game character is heard is affected i.e. whether the volume, pitch, etc of the game characters voice is adapted and/or effects are applied to the voice such as muffling or echo and/or indicates a situation where the quality of how the game character hears is affected i.e. whether the volume, pitch, etc of the voice of other game characters is adapted and/or effects are applied to those voices such as muffling or echo.

The memory 32 stores a Rule Lookup table 38. The Rule lookup table records against each of the plurality of different state identifiers a rule or set of rules for generating a list of destinations.

If the Rule lookup table 38 is queried with such an identifier, it outputs the rule or rules recorded against that state identifier in the table. The logic defined in the rule or rules is used by the processor 40 to determine a list of destinations and, if appropriate, quality indications. Typically the Rule lookup table records a different rule or rules for each state identifier.

Examples of suitable rules are:
a) communicate only with game characters who are members of the same team
b) communicate only with game characters who are members of a different team
c) communicate only with game characters who are in certain defined situations.

The rules may additionally define the type of communication e.g. duplex listening and speaking or simplex listening or simplex speaking. The rules may additionally define the quality of the communication e.g. volume level, applied sound effects such as muffling or echo.

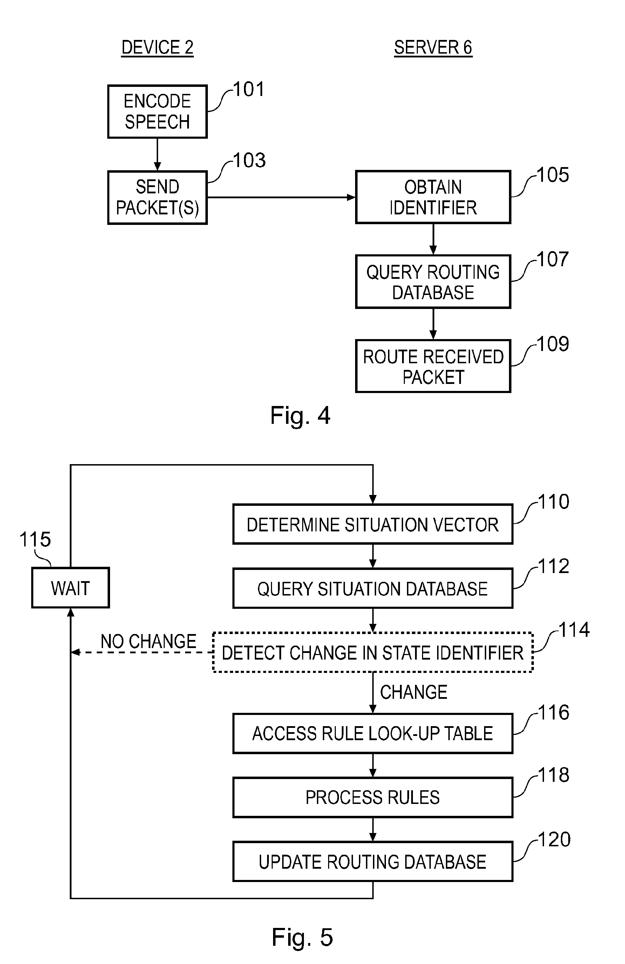

Fig. 4 illustrates a method of routing a voice communication created while playing the game. The user 4A of the first device 2A speaks. At step 101, the speech is captured by the audio input device 12 of the first device 2A and is encoded as a series of VoIP (Voice over Internet Protocol) packets, each of which identifies the first device 2A using an identifier. At step 103, the first device 2A sends VoIP packets to the server 6. At step 105, the server 6 parses a received VoIP packet to identify the identifier of the device from which it originated. At step 107, the server 6 queries the routing database 34 with the obtained identifier and receives in reply a list of identifiers. At step 109, the server 6 forwards the received VoIP packet to each of the destinations identified in the returned list.

Fig. 5 illustrates a method of dynamically updating the routing database 34 at the server 6. While the game is being played, the situations of the game characters change and this may necessitate a change in which game characters can communicate with each other using speech.

At step 110, the game server 6 determines the situation vector for a first game character. At step 112, the game server 6 queries the situation database 36 with the determined situation vector. The game server 6 stores the value of the parameter current_state_identifier as the value of old_state_identifier and stores the value of the state identifier returned by the situation database 36 as the new value of the parameter current_state_identifier.

At step 114, the game server 6 then compares the values of the parameters current_state_identifier and old_state_identifier. If there is a match, the process moves to step 115, where the process waits a predetermined period before returning to step 110 again. If there is no match, the process moves to step 116.

At step 116, the game server 6 accesses the Rule Look-up table 38 using the value of current_state_identifier and receives in reply a set of rules for generating destination addresses for this situation.

At step 118, the processor 40 of the game server 6 processes the logic of the returned rules and generates a list of suitable destination addresses.

At step 120, the routing database 34 is updated using the determined list so that if it is queried using the identifier of the first game character it returns the determined list of suitable destination addresses.

The same process occurs for each character in the game.

The process described with reference to Fig. 5 assumes that the rules used for a first game character are not dependent upon the situation of other game characters. That is, the rules control the sending of voice packets based upon the situation of the originator of the packet and not upon the situation of the possible destination of the packet. Suitable rules may be:
a) speak only to game characters who are members of the same team
b) speak only to game characters who are members of a different team However, the process is not suitable for rules that are dependent upon the situation of other game characters. Examples of such rules are:
c) speak only to game characters who are in certain defined situations.
d) hear only game characters who are in certain defined situations.

The process may however be easily adapted to take account of the situation of possible destinations. After step 112, the process moves directly to step 116.

The rules obtained in step 116, may include logic that uses the values of current_state_identifier associated with different game characters. For example, a blacklist of game characters may be maintained who are not able to hear voice communications. Any character that appears in the blacklist is removed as a final step to create the generated list of suitable destination addresses before it is stored in the routing database 34. A game character may enter and leave the blacklist depending upon the value of the current_state_identifier associated with it.

It will therefore be appreciated from the preceding description that a first player may typically communicate with a first group of players. This first group of players may correspond to the members of the team to which the first player belongs. However, when the first game character (which is controlled by the first player) enters certain defined situations within the game the content of the first group of players with whom the first player can communicate varies in a defined manner. Thus, for example, if a player enters a geographic region within the game that has reduced communications e.g. a forest or cave, then the first group of players may correspond to the members of the team to which the first player belongs that control game characters that are also in the same geographic region within the game. As another example, if a first game character is captured in the game, then the first player may be unable to communicate or may only be able to communicate with players from a team or teams to which the first player does not belong.

The computer program instructions 33 provide the logic and routines that enables the server 6 to perform the methods illustrated in Figs. 4 and 5. The computer program instructions may arrive at the server 6 via an electromagnetic carrier signal or be copied from a computer readable physical entity such as a computer program product, a memory device or a record medium such as a CD-ROM or DVD.

Although embodiments of the present invention have been described in the preceding paragraphs with reference to various examples, it should be appreciated that modifications to the examples given can be made without departing from the scope of the invention as claimed. For example, although the invention has been described in the context of a character based game it may be used in other multi-player games or applications. In addition, although the gaming system 10 comprises a gaming server 6 and a plurality of remote gaming devices 2A, 2B, 2C in the described embodiment, in other embodiments the function of the server may be included within one of the gaming devices, which may for example operate as a Master of an ad-hoc low power radio frequency network such as BLUETOOTH.

A non-limiting example of how the invention can be applied, is in a game where the game character has a virtual phone and the voice quality degrades if he cannot collect 'energy points' to recharge his phone until communication is prevented. Communication using the mobile telephone could also be prevented if another character has a jamming transmitter which could prevent communication using certain virtual phones such as those within a certain range within the game.

According to a first group of embodiments of the invention there is provided a method for controlling communications between players of a multi-player game while they participate in the multi-player game, comprising: automatically changing communication parameters to define a first group of players that hear a first player and a second, different group of players that are heard by the first player in response to a change in a situation, within the game, of a game character.

According to the first group of embodiments of the invention there may be provided a method as claimed in claim 1, wherein the automatic change of the communication parameters is in response to a change in a situation, within the game, of a first game character controlled by the first player.

According to the first group of embodiments of the invention it may be provided that the automatic change of the communication parameters is in response to a change in a situation, within the game, of a second game character controlled by a second player.

According to the first group of embodiments of the invention it may be provided that the communication parameters define, for each player, the players with which that player has duplex listening and speaking communications, the players with which that player has simplex listening communications only and the players with which that player has simplex speaking communications only.

According to the first group of embodiments of the invention it may be provided that each player has an associated set of communication parameters that define which other players hear that player.

According to the first group of embodiments of the invention it may be provided that each player has an associated set of communication parameters that define which other players are heard by that player.

According to the first group of embodiments of the invention it may be provided that the communication parameters additionally qualitatively control how one or more of the first group of players hear the first player and/or qualitatively control how one or more of the second group of players is heard by the second player.

According to the first group of embodiments of the invention it may be provided that the situation of the first game character is determined without reference to another game character.

According to the first group of embodiments of the invention it may be provided that a situation of the first game character is defined by a plurality of situation parameters.

According to the first group of embodiments of the invention it may be provided that one of the plurality of situation parameters defines whether the first game character is or is not captured within the game.

According to the first group of embodiments of the invention it may be provided that one of the plurality of situation parameters defines the geographical location of the first game character within the game.

According to the first group of embodiments of the invention it may be provided that the values of at least a first situation parameter and a second situation parameter define a situation, such that when the first situation parameter has a first value, the communication parameters depend upon at least the value of the second situation parameter and when the first situation parameter has a second value, the communication parameters do not depend upon the value of the second situation parameter and wherein when a situation of the first game character within the game changes from a first situation to a second, different situation the values of the first and second situation parameters change.

According to the first group of embodiments of the invention it may be provided that the communication parameters control routing of voice communications.

According to the first group of embodiments of the invention it may be provided that a set of the communication parameters determine the destination(s) of voice communications originated by the first player and separately determine the voice communications that terminate at the first player.

According to the first group of embodiments of the invention the method may further comprise: detecting when a situation of the first game character changes in a predetermined manner that necessitates a predetermined change in the communication parameters.

According to a second group of embodiments of the invention there is provided a server for controlling communications between players of a multi-player game while they participate in the multi-player game, comprising: a memory for storing communication parameters that control communication between the players; and means for automatically changing communication parameters to define a first group of players that hear a first player and a second, different group of players that are heard by the first player, in response to a change in a situation, within the game, of a game character.

According to a third group of embodiments of the invention there is provided a computer program comprising computer program instructions, which when loaded in a processor provide: means for recording a change in situation, within a game, for a game character controlled by a player; and means, responsive to the recorded change in situation, within the game for automatically changing communication parameters to define a first group of players that hear a first player and a second, different group of players that are heard by the first player.

According to a fourth group of embodiments of the invention there is provided an electronic gaming device, for playing a multi-player game, that enables communications between a user of the device and players of the multi-player game using other devices and participating in the multi-player game, comprising: a display; an audio input device; an audio output device; a user input device for controlling a game character within the game; a communications interface for remote communication with one or more other devices; and means for automatically changing communication parameters to define a first group of players that hear the user and a second, different group of players that are heard by the user in response to a change in a situation, within the game, of a game character.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method of controlling voice communication from a first player participating in a multi-player game to other players participating in the multi-player game, comprising:
automatically routing on-going voice communications originating at the first player to a first group of players and automatically routing on-going voice communications originating at each of a second, different group of players to the first player, wherein the first group of players and the second group of players are separately defined in dependence upon a situation or the situations of one or more game characters within the game.

2. A method as claimed in claim 1, wherein the communication parameters define, for each player, the players with which that player has duplex listening and speaking communications, the players with which that player has simplex listening communications only and the players with which that player has simplex speaking communications only.

3. A method as claimed in claim 2, wherein the communication parameters additionally qualitatively control the communications.

4. A method as claimed in claim 2 or 3, wherein the communication parameters for a player are changed in response to a change in a situation, within the game, of a game character controlled by that first player.

5. A method as claimed in claim 2, 3, or 4, wherein the communication parameters for a player are changed in response to a change in a situation, within the game, of a game character controlled by another player.

6. A method as claimed in any one of claims 2 to 3, wherein the communication parameters for a player define which other players hear that player.

7. A method as claimed in any one of claims 2 to 4, wherein the communication parameters for a player define which other players are heard by that player.

8. A method as claimed in any one of claims 2 to 5, wherein the situation of the first game character is determined without reference to another game character.

9. A server for controlling voice communications between players of a multi-player game while they participate in the multi-player game, comprising:
a memory for storing first routing information that controls the routing of on-going voice communications originating at the first player to a first group of players and for storing second routing information that controls the routing on-going voice communications originating at each of a second, different group of players to the first player; and
means for automatically updating the first routing information and independently updating the second routing information in dependence upon a situation or situations, within the game, of a game character or characters.

10. A computer program comprising computer program instruction, which when loaded in a processor provide
means for recording a situation, within the game, for a game character controlled by a player; and
means, responsive to the recorded situation of the game character, for automatically updating, in a defined manner, the destination(s) for on-going voice communications originating at the player and for independently updating, in a defined manner, the identity of the players originating on-going voice communication that are destined for the player.

11. An electronic gaming device, for playing a multi-player game, that enables voice communications between a user of the device and players of the multi-player game using other devices and participating in the multi-player game, comprising:
a display;
an audio input device
an audio output device;
a user input device for controlling a game character within the game;
a communications interface for supporting voice communication with one or more other devices; and
means for automatically updating the destination(s) for on-going voice communications originating at the device and for independently updating which on-going voice communication terminate at the device, the updating being dependent upon a situation, within the game, of a game character.
